# EUROPÄISCHE PATENTSCHRIFT

(11) **EP 1 066 131 B1**
(45) Veröffentlichungstag und Bekanntmachung des Hinweises auf die Patenterteilung: **20.08.2003**
(21) Anmeldenummer: 98966376.0
(22) Anmeldetag: 19.12.1998
(51) Int. Cl.: B23K 33/00, F01L 3/14

(54) **EINEN HOHLRAUM AUFWEISENDES GASWECHSELVENTIL**
GAS EXCHANGE VALVE WITH A HOLLOW SPACE
SOUPAPE D'ECHANGE DE GAZ COMPORTANT UN ESPACE CREUX

(30) Priorität: 29.01.1998 DE 19803294
(43) Veröffentlichungstag der Anmeldung: 10.01.2001
(73) Patentinhaber: MAHLE Ventiltrieb GmbH, 70376 Stuttgart (DE)
(72) Erfinder: KELLER, Peter, D-61389 Schmitten (DE); MÜCK, Lothar, D-61200 Wölfersheim (DE)
(74) Vertreter: Pohle, Reinhard
(86) Internationale Anmeldenummer: EP9808342
(87) Internationale Veröffentlichungsnummer: WO99038644

(56) Entgegenhaltungen:
- DE-A- 4 024 084
- DE-C- 706 860
- DE-C- 712 125
- US-A- 2 411 734
- STEIN H.: 'Natriumgekühlte Hohlventile und deren Herstellung' MTZ MOTORTECHNISCHE ZEITSCHRIFT Nr. 9, 1961

## Beschreibung

Die Erfindung betrifft ein Verfahren zum Verschließen einer Öffnung eines in einem Gaswechselventil angeordneten Hohlraumes nach dem Oberbegriff des Anspruchs 1.

Ein derartiges Verfahren ist aus der DE-PS 40 24 084 bekannt. Hierbei wird die Bohrung des hohlen Gaswechselventils durch Auftragsschweißen verschlossen, indem ein pulverförmiger Zusatzwerkstoff z. B. durch Laserschweißen aufgebracht wird oder indem ein MIG-Schweißverfahren oder ein WIG-Schweißverfahren mit Zusatzdraht angewendet wird. Es hat sich gezeigt, daß insbesondere beim Verschließen der Bohrung durch Laser-Pulverauftragsschweißen die für hochwertige Motorenteile geltenden Qualitätsanforderungen nur durch aufwendige Prüfungen erreicht werden können.

Aus der Deutschen Patentschrift Nr. 712 125 ist ein Verfahren zur Herstellung eines mit einem Kühlmittel gefüllten Tellerventiles bekannt, das auf der Tellerseite des Ventiltellers nahe dem Rand einer zu verschließenden Öffnung eine Werkstoffanhäufung aufweist, die zum Verschließen der Öffnung erhitzt und anschließend mit Hammerschlägen derart gestreckt wird, dass dadurch die Öffnung fast vollständig verschlossen wird. Um eine vollständige Abdichtung der Öffnung zu erreichen, werden gemäß Stand der Technik dabei verbleibende kleine Löcher verschweißt. Auch hierbei ist mittels einer aufwendigen Qualitätskontrolle die Dichtigkeit des Öffnungsverschlusses regelmäßig zu überprüfen, da sowohl Anzahl und Ort der beirn Zuschmieden der Öffnung verbleibenden Löcher als auch der Erfolg dabei, diese durch Verschweißen komplett abzudichten, von vielen Zufälligkeiten abhängig sind.

Die Erfindung beschäftigt sich daher mit dem Problem, bei gattungsgemäßen Ventilen die Öffnung des von Ventilschaft und Ventilteller gebildeten Hohlraumes so zu verschließen, daß eine optimale Schweißzone erzielt wird.

Dieses Problem wird gelöst durch ein Verfahren mit den Merkmalen des Anspruchs 1. Vorteilhafte Weiterbildungen sind Gegenstand der Unteransprüche.

Die Erfindung beruht auf dem Gedanken, daß beim Umschmelzen des als Aufmaß am Ventilteller bzw. Ventilfuß vorgehaltenen Materials zwecks Verschließen der Öffnung bzw. Bohrung des
Ventils eine bessere Schweißqualität entstehen wird als bei Zugabe von pulverförmigem oder drahtförmigem Zusatzmaterial. Dabei wird das entsprechende Aufmaß bzw. die zusätzliche Materialanhäufung im Bereich der Öffnung am Ventilteller durch Schmieden angeformt, am Ventilfuß genügt es, diesen um wenige mm zu verlängern.

Zwar ist es aus Fig. 11 der US 2,411,734 bekannt, die Bohrung eines einen Hohlraum aufweisenden Gaswechselventils ohne Zugabe von Zusatzmaterial zu verschließen, dies erfolgt jedoch durch Zusammenquetschen der Bohrungswände im Ventilfußbereich, wobei ein entsprechendes radiales Aufmaß vorgehalten wird.

Die Erfindung wird im folgenden anhand eines Ausführungsbeispiels näher erläutert. Es zeigt:

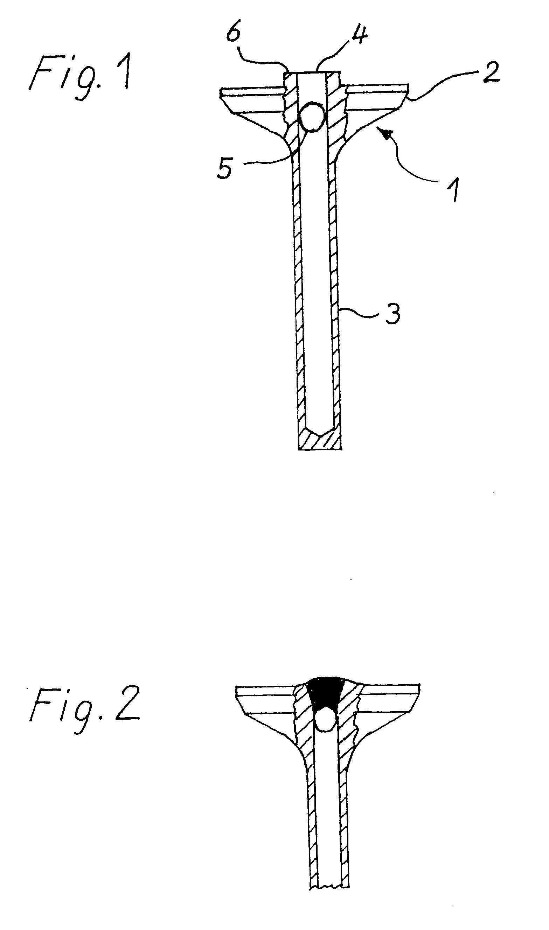

- Fig. 1: ein erfindungsgemäßes Ventil im Querschnitt
- Fig. 2: das erfindungsgemäße Ventil nach dem Zuschweißen der Öffnung.

Das Ventil 1 weist im Ventilteller 2 und im Schaft 3 eine Bohrung 4 zur Aufnahme von Natrium auf. Die Bohrung 4 wird nach dem Einbringen des Natriums durch Schweißen verschlossen. Als Schweißbadunterlage ist ein passender Stopfen 5 mit definiertem Abstand von der Oberkante des Ventils in die Bohrung eingepreßt. Am oberen Ende der Bohrung ist einstückig mit dem Ventilteller ein bundförmiges Aufmaß 6 vorhanden, das beim Verschließen der Bohrung umgeschmolzen wird und dabei in die Bohrung bis auf die Schweißbadunterlage läuft. Der Umschmelzvorgang erfolgt mit einem Laser, dessen Strahl in zumindest horizontaler Richtung verfahrbar ist. Beim Umschmelzen und Verschließen der Öffnung dreht sich das vertikal stehende Ventil um seine Achse, während der Laser zweimal von radial außen beginnend durch horizontales Verfahren über das bundförmige Aufmaß und die Öffnung geführt wird. Dabei kann der Laser einen kleinen Anstellwinkel von wenigen Winkelgrad aufweisen, um aufgrund der meist vorhandenen Blaswirkung das Einfließen des aufgeschmolzenen Materials in die Öffnung zu erleichtern. Um ein zügiges Arbeiten zu ermöglichen, sollte die Leistung des Lasers in der Größenordnung von 5 kW liegen.

Prinzipiell ist es auch möglich, den Umschmelzprozeß unter Schräglage der Ventildrehachse von der Bohrungsinnenseite startend durchzuführen.

Das Volumen des bundförmigen Aufmaßes beträgt etwa das 1,2-fache des Volumens der zu verschließenden Öffnung. Entsprechendes gilt für das Verschließen einer Bohrung im Ventilfuß.

Um beim Schweißen ein Überhitzen des relativ leichten Ventils zu vermeiden, ist das Ventil erforderlichenfalls in einer gekühlten Aufnahme einzuspannen bzw. bestehen die Aufnahmen aus wärmeableitendem Kupfer.

## Patentansprüche

1. Verfahren zum Verschließen einer auf der Tellerseite eines Ventiltellers (2) eines Gaswechselventils (1) liegenden Öffnung eines im Gaswechselventil (1) koaxial zu dessen Längsachse angeordneten, zylindrischen und länglich ausgebildeten Hohlraumes mit kreisförmigem Querschnitt,
**dadurch gekennzeichnet,**
- **dass** an den Rand der Öffnung ein bundförmiges, aus einem schmelzbaren Material bestehendes Aufmaß (6) angeformt wird, das mit dem Ventilteller einstückig ausgebildet ist
- **dass** in den Hohlraum ein Stopfen (5) als Schweißbadunterlage mit definiertem Abstand vom Rand der Öffnung eingepresst wird, und
- **dass** das Aufmaß (6) mittels eines Lasers zum Schmelzen gebracht und die Schmelze in die zu verschließende Öffnung geleitet wird.

2. Verfahren zum Verschließen einer Öffnung eines in einem Gaswechselventil (1) angeordneten Hohlraumes nach Anspruch 1,
**dadurch gekennzeichnet,**
**dass** das Gaswechselventil (1) zum Schmelzen des Aufmaßes (6) und zum Verschließen der Öffnung um seine Längsachse in Drehung versetzt wird, während der Laserstrahl durch horizontales Verfahren mehrmals über das Aufmaß (6) und die Öffnung geführt wird.

3. Verfahren zum Verschließen einer Öffnung eines in einem Gaswechselventil (1) angeordneten Hohlraumes nach Anspruch 1 oder 2,
**dadurch gekennzeichnet, dass** der Laser gegenüber der Längsachse des Gaswechselventiles (1) einen solchen Anstellwinkel aufweist, dass es möglich wird, das geschmolzene Material des Aufmaßes (6) mittels der Blaswirkung des Laserstrahles in die Öffnung zu leiten.

4. Verfahren zum Verschließen einer Öffnung eines in einem Gaswechselventil (1) angeordneten Hohlraumes nach einem der Ansprüche 1 bis 3,
**dadurch gekennzeichnet, dass** der Laser eine Leistung von näherungsweise 5 KW aufweist.

5. Verfahren zum Verschließen einer Öffnung eines in einem Gaswechselventil (1) angeordneten Hohlraumes nach einem der Ansprüche 1 bis 4, **dadurch gekennzeichnet, dass** das Volumen des Aufmaßes (6) näherungsweise dem 1,2-fachen des Volumens des Hohlraumes zwischen dem Stopfen (5) und der Öffnung beträgt.

6. Verfahren zum Verschließen einer Öffnung eines in einem Gaswechselventil (1) angeordneten Hohlraumes nach einem der Ansprüche 1 bis 5, **dadurch gekennzeichnet, dass** zur Durchführung des Verfahrens das Gaswechselventil (1) in eine gekühlte Aufnahme eingespannt wird.

7. Verfahren zum Verschließen einer Öffnung eines in einem Gaswechselventil (1) angeordneten Hohlraumes nach Anspruch 6, **dadurch gekennzeichnet, dass** die Aufnahme aus Kupfer besteht.

## Claims

1. Method for closing an aperture of a cylindrical and elongate hollow space with circular cross-section arranged in the gas exchange valve (1) coaxial to the longitudinal axis thereof and located on the disc side of a valve disc (2) of a gas exchange valve (1), **characterised in that**
- a collar-like excess mass (6) consisting of a meltable material and which is integrally constructed with the valve disc is formed on the edge of the aperture,
- **in that** a plug (5) is pressed into the hollow space as a welding bath base at a defined spacing from the edge of the aperture, and
- **in that** the excess mass (6) is caused to melt by means of a laser and the melt is conveyed into the closing aperture.

2. Method for closing an aperture of a hollow space arranged in a gas exchange valve (1) according to claim 1, **characterised in that** to melt the excess mass (6) and to close the aperture the gas exchange valve (1) is set into rotation about its longitudinal axis, while the laser beam is guided repeatedly over the excess mass (6) and the aperture owing to horizontal movement.

3. Method for closing an aperture of a hollow space arranged in a gas exchange valve (1) according to claim 1 or 2, **characterised in that** the laser has an angle of incidence with respect to the longitudinal axis of the gas exchange valve (1) such that it is possible to guide the molten material of the excess mass (6) into the aperture by means of the blowing action of the laser beam.

4. Method for closing an aperture of a hollow space arranged in a gas exchange valve (1) according to any of claims 1 to 3, **characterised in that** the laser has a power of approximately 5 KW.

5. Method for closing an aperture of a hollow space arranged in a gas exchange valve (1) according to any of claims 1 to 4, **characterised in that** the volume of the excess mass (6) is approximately 1.2 times the volume of the hollow space between the plug (5) and the aperture.

6. Method for closing an aperture of a hollow space arranged in a gas exchange valve (1) according to any of claims 1 to 5, **characterised in that** for carrying out the method, the gas exchange valve (1) is fixed in a cooled receptacle.

7. Method for closing an aperture of a hollow space arranged in a gas exchange valve (1) according to claim 6, **characterised in that** the receptacle consists of copper.

## Revendications

1. Procédé pour obturer un orifice situé côté tête d'une tête de soupape (2) d'un espace creux de section transversale circulaire, réalisé cylindrique et allongé, disposé dans une soupape d'échange de gaz (1) coaxialement par rapport à son axe longitudinal,
**caractérisé en ce**
- **que** sur le bord de l'orifice une surépaisseur (6) en forme de collerette en matériau fusible est formée, qui est réalisée d'un seul tenant avec la tête de soupape,
- **qu'**un bouchon (5) est inséré par pression dans l'espace creux en tant que support de bain de soudage à une distance définie du bord de l'orifice et
- **que** la surépaisseur (6) est fondue à l'aide d'un laser et que la matière fondue est guidée dans l'orifice à obturer.

2. Procédé d'obturation d'un orifice d'un espace creux disposé dans une soupape d'échange de gaz (1) selon la revendication 1,
**caractérisé en ce que**,
pour faire fondre la surépaisseur (6) et pour obturer l'orifice, la soupape d'échange de gaz (1) est déplacée en rotation autour de son axe longitudinal, tandis que le rayon laser est déplacé plusieurs fois au-dessus de la surépaisseur (6) et de l'orifice par translation horizontale.

3. Procédé d'obturation d'un orifice d'un espace creux disposé dans une soupape d'échange de gaz (1) selon la revendication 1 ou 2,
**caractérisé en ce que** le laser présente vis-à-vis de l'axe longitudinal de la soupape d'échange de gaz (1) un angle d'incidence tel qu'il est possible de guider la matière fondue de la surépaisseur (6) dans l'orifice au moyen de l'effet de soufflage du rayon laser.

4. Procédé d'obturation d'un orifice d'un espace creux disposé dans une soupape d'échange de gaz (1) selon l'une des revendications 1 à 3,
**caractérisé en ce que** le laser a une puissance d'approximativement 5 kW.

5. Procédé d'obturation d'un orifice d'un espace creux disposé dans une soupape d'échange de gaz (1) selon l'une des revendications 1 à 4, **caractérisé en ce que** le volume de la surépaisseur (6) s'élève à approximativement 1,2 fois le volume de l'espace creux entre le bouchon (5) et l'orifice.

6. Procédé d'obturation d'un orifice d'un espace creux disposé dans une soupape d'échange de gaz (1) selon l'une des revendications 1 à 5, **caractérisé en ce que,** pour mettre en oeuvre le procédé, la soupape d'échange de gaz (1) est bridée dans une structure refroidie.

7. Procédé d'obturation d'un orifice d'un espace creux disposé dans une soupape d'échange de gaz (1) selon la revendication 6, **caractérisé en ce que** la structure est constituée de cuivre.
